# EUROPEAN PATENT SPECIFICATION

(11) **EP 4 116 344 B1**
(45) Date of publication and mention of the grant of the patent: **25.12.2024**
(21) Application number: 21764716.3
(22) Date of filing: 03.03.2021
(51) Int. Cl.: C08F 290/06, C08F 291/02, C09J 5/00, C09J 11/06, C09J 11/08, C08F 4/40, C08F 220/18, C09J 167/06, C09J 201/06, C09J 4/06

(54) **COMPOSITION**
ZUSAMMENSETZUNG
COMPOSITION

(30) Priority: 03.03.2020 JP 2020036174
(43) Date of publication of application: 11.01.2023
(73) Proprietor: Denka Company Limited, Tokyo 103-8338 (JP)
(72) Inventor: TAKAHASHI, Yusuke, Tokyo 103-8338 (JP); NEGISHI, Yutaka, Tokyo 103-8338 (JP)
(74) Representative: Gulde & Partner
(86) International application number: PCT/JP2021/008279
(87) International publication number: WO 2021/177379

(56) References cited:
- WO-A1-2008/069298
- WO-A1-2017/163589
- WO-A1-2018/051940
- JP-A- 2005 048 095
- JP-A- 2009 275 131
- JP-A- 2010 230 713
- JP-A- 2012 041 415
- JP-A- 2012 072 329
- JP-A- 2012 077 265
- JP-A- 2012 144 604
- JP-A- 2016 020 467
- JP-A- 2016 074 866

## Description

### TECHNICAL FIELD

The present invention relates to a composition, especially relates to a composition exhibiting good flexibility, heat cycle resistance and heat resistance, and exhibiting good adhesion to both metals and resins.

### BACKGROUND ART

A room temperature fast-curing adhesive composition has been used from the viewpoint of saving labors, resources, and energy, which can adhere at room temperature in a short time. The room temperature fast-curing adhesive composition includes a two-part fast-curing epoxy-based adhesive composition, an anaerobic adhesive composition, an instant adhesive composition and a second-generation acrylic adhesive composition (SGA).

The two-part fast-curing epoxy-based adhesive has a main agent and a curing agent weighed and mixed, are applied to adherends, and cured by the reaction between the main agent and the curing agent. Generally, the two-part fast-curing epoxy-based adhesive has been widely used for structural applications, due to a high durability and high adhesive strength. On the other hand, the conventional two-part fast-curing epoxy-based adhesive has also hard and brittle properties, and the flexibility is very low. Therefore, when it is applied to adherends of the different types, a strain caused by the difference in linear expansion coefficient between the different adherends cannot be alleviated, and peelings and cracks often occur. Further, the main agent and the curing agent require to be accurately weighed so as to have a predetermined mixing ratio, otherwise poor curing might be incurred.

The anaerobic adhesive is cured by crimping the adhesive composition between the adherends to block air. However, in case that a part of the adhesive composition of the anaerobic adhesive was squeezed out from the adherends during crimping, and the squeezed-out portion came into contact with air, the curing reaction might be prevented and poor curing will occur. Further, even when a clearance between the adherends is large, insufficient crimping cannot block air, resulting in poor curing.

The instant adhesive usually contain cyanoacrylate as the main component and can be cured in a very fast time, therefore it has good workability. However, it is not suitable for structural applications requiring durability, because the obtained cured product is brittle and has low adhesiveness.

SGA is comprised of a first agent containing an organic peroxide and a second agent containing a reducing agent that decomposes the organic peroxide contained in the first agent to generate radicals. As the SGA, a two-component main agent type is commonly known, which contains a main component such as a polymerizable (meth)acrylic monomer or an elastomer in both first agent and second agent.

The two-component main agent type SGA has a good workability, because it does not require accurate weighing of the two agents, and can cure at room temperature from a few minutes to several ten minutes by just contacting the two agents, even if the weighing and mixing are incomplete. Furthermore, it has a high tensile elongation and good hardening in the squeezed-out portion, it has been widely used from the electrical and electronic parts field and the civil-engineering and construction field. Patent Documents 1 to 5 disclose various proposals of such SGA.

### CITATION LIST

### Patent Literature

Patent Document 1: JP 2000-109783 A
Patent Document 2: JP 2017-031262 A
Patent Document 3: JP 2010-188651 A
Patent Document 4: JP 2002-105109 A
Patent Document 5: JP 2007-056232 A
Patent Document 6: JP 2010 230713 A
Patent Document 7: JP 2005-048095 A

### SUMMARY OF INVENTION

### Solution to Problem

The adhesive cannot exhibit good performance without considering the adherends to be applied might be exposed to a severe environment. In particular, it is known that maintaining adhesiveness under an environment where high and low temperatures are repeated (also referred to as "improvement of "heat cycle resistance"") is very difficult. In the technical field of the art, heat cycle resistance and heat resistance are considered to be distinct properties.

The SGA according to the prior art, for example, could not achieve both flexibility and adhesion together. The SGA according to the prior art, for example, could not exhibit good adhesion to both metals and resins, while maintaining good flexibility, heat cycle resistance, and heat resistance. For example, Patent Document 1 discloses that the use of a flexible (meth)acrylate or urethane prepolymer can provide high flexibility and alleviate a strain caused by curing shrinkage stress in a metal adherends. However, it does not disclose an adhesion to resin adherends. In addition, it does not disclose a heat cycle resistance or heat resistance.

Patent Document 2 discloses that the use of a liquid elastomer can improve a low temperature property in the SGA. However, Patent Document 2 does not disclose that both flexibility and adhesion are compatible. Patent Document 2 does not disclose heat cycle resistance and heat resistance, and tensile elongation.

Patent Document 3 discloses that a reaction of a (meth)acrylate having a hydroxyl group with a poly isocyanate having an isocyanate group can provide a composition having high stress relaxation property. However, it is known that the urethane bond formed by the reaction of the hydroxyl group and the isocyanate group is hydrolyzed, leading a difficulty in durability. Further, it is known that polyisocyanate having an isocyanate group is decomposed by reacting with water, leading a poor storage stability.

Patent Document 4 discloses that the use of zeolite can improve a heat resistance of the SGA. However, Patent Document 4 does not disclose that both flexibility and adhesion are compatible.

Patent Document 5 discloses that a specific (meth)acrylate is used as a technique for the purpose of improving the adhesion to resins. For example, resin materials often used as structural moieties, such as a polycarbonate resin, ABS (acrylonitrile-butadiene-styrene) resin, phenol resin, and epoxy resin, have an aromatic skeleton, and the use of phenoxyethyl (meth)acrylate similarly having an aromatic skeleton is considered to improve an adhesion to the adherends. However, the obtained cured products do not have high flexibility in general, because (meth)acrylates having aromatic skeletons has a rigid structure. That is, the problem of trade-off relation between the resin adhesion and the flexibility had not been solved.

Patent Document 6 discloses a sealing agent for a liquid crystal one-drop-fill method, which is suitable for manufacturing a liquid crystal display element capable of reducing light escaping in liquid crystal display because the sealing agent has excellent pot life and high adhesiveness between a seal and a substrate and does not almost cause liquid crystal contamination. The sealing agent for the liquid crystal one-drop-fill method contains a (meth)acrylate compound, a curable resin having an epoxy group and malonic acid dihydrazide.

Patent Document 7 discloses an active-energy-ray-hardenable resin composition for adhesion of information recording media, wherein the composition consists of a resin composition comprising (1) an epoxy (meth)acrylate obtained by reacting (A) a hydroxy-containing (meth)acrylate with (B) an acid anhydride containing one acid anhydride group to form an ester and reacting the ester with (C) a difunctional or higher epoxy resin, (2) a (meth)acryloyl-containing compound other than (1) and (3) an photopolymerization initiator.

### Means for Solving the Problems

The present invention is directed to a composition, comprising the following components (1) to (3):
(1) a reactive compound having an aromatic ring and a hydroxyl group which is a reaction product of a lactone-modified (meth)acrylate monomer, an acid anhydride, and an epoxy monomer, wherein a cured product of the reactive compound, obtainable by irradiation with ultraviolet rays, has a tensile elongation of 50% or more measured in an atmosphere at 23 °C according to JIS K 7161-2:2014;
(2) a reactive compound other than component (1) comprising:
   (2-1) alkyl (meth)acrylate,
   (2-2) hydroxyalkyl (meth)acrylate, and
   (2-3) (meth)acrylate having a cyclic structure; and
(3) a polymerization initiator.

In an embodiment, component (1) contains a bisphenol moiety.

In embodiment, component (1) contains four or more aromatic rings per molecule.

In an embodiment, component (1) contains five or less hydroxyl groups per molecule.

According to an embodiment, an amount of component (1) is in a range of 0.1 or more to 20 or less parts by mass with respect to 100 parts by a total mass of components (1) and (2).

In an embodiment, component (1) has a (meth)acryloyl group.

According to an embodiment, component (1) has a weight-average molecular weight M_{w} of 1,000 or more measured by a GPC method.

According to an embodiment, the composition according to the present invention further comprises:
(4) an elastomer.

According to an embodiment, the composition according to the present invention further comprises:
(5) a reducing agent.

According to an embodiment, the composition according to the present invention is a two-part composition which contains:
a first agent containing at least (3) polymerization initiator; and
a second agent not containing at least (3) polymerization initiator.

According to an embodiment, the composition according to the present invention is a two-part composition which contains:
a first agent containing at least (3) polymerization initiator; and
a second agent containing at least (5) a reducing agent.

The present invention is also directed to a curable composition comprising the composition according to the present invention.

The present invention is also directed to an adhesive composition comprising the curable composition according to the present invention.

The present invention is also directed to a bonded body comprising an adherend bonded by the adhesive composition according to the present invention.

The present invention is also directed to a bonding method, comprising the steps of:
applying the adhesive composition according to the present invention to an adherend; and bonding the adherend.

According to an embodiment of the composition according to the present invention, the component (1) is a compound comprising any of the following structural formulae: 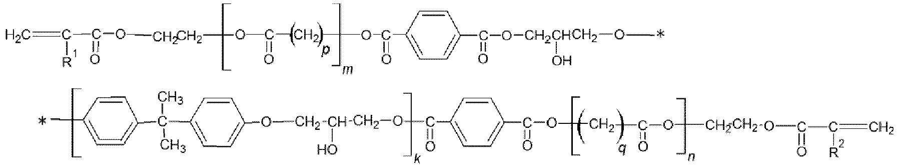
where R¹ and R² represent independently hydrogen atoms or methyl group,
and k, m, n, p and q represent independently an integer greater than or equal to 0; or 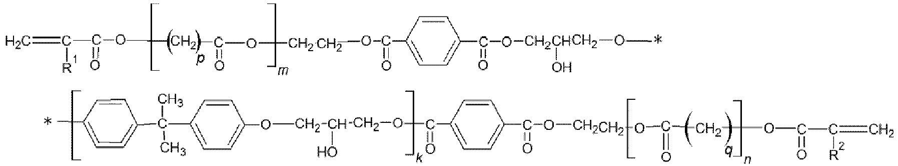
   where R¹ and R² represent independently hydrogen atoms or methyl group,
   and k, m, n, p and q represent independently an integer greater than or equal to 0.

In an embodiment of the composition according to the present invention, k is an integer greater than or equal to 1.

### Advantageous Effects of Invention

The composition provided by the embodiments of the present invention can provide an effect of good flexibility and adhesion. The composition provided by the embodiments of the present invention, for example, can exhibit good flexibility, heat cycle resistance and heat resistance, and provide good adhesion to both metals and resins.

### DESCRIPTION of EMBODIMENTS

Hereinafter, embodiments of the present invention will be described in detail, but the present invention is not limited to the embodiments. In addition, the terms "part" and "%" in this specification shall be based on mass unless otherwise specified. Unless otherwise specified, the numerical ranges in this specification shall include the upper limit value and the lower limit value. The terms "usage amount" and "content" of the component in this specification mean an amount based on the entire composition unless otherwise specified. The term "normal temperature" in this specification shall refer to the temperature defined in JIS Z 8703: 1983, that is, 20 ± 15 °C.

The term "monofunctional (meth)acrylate" in this specification means a (meth)acrylate having a (meth)acryloyl group. Further, the term "polyfunctional (meth)acrylate" means a (meth)acrylate having two or more (meth)acryloyl groups.

The curable composition (hereinafter, also simply referred to as "composition") that can be provided by embodiments of the present invention includes
(1) a reactive compound having an aromatic ring and a hydroxyl group which is a reaction product of a lactone-modified (meth)acrylate monomer, an acid anhydride, and an epoxy monomer, and a cured product of the reactive compound, obtainable by irradiation with ultraviolet rays, having a tensile elongation of 50% or more measured in an atmosphere at 23 °C according to JIS K 7161-2:2014;
(2) a reactive compound other than component (1) comprising:
   (2-1) alkyl (meth)acrylate,
   (2-2) hydroxyalkyl (meth)acrylate, and
   (2-3) (meth)acrylate having a cyclic structure; and
(3) a polymerization initiator.

The component (1) is a novel component that can provide the composition with higher adhesion to resins and metals and higher flexibility as single cured product, and also has higher reactivity capable of copolymerizing with other reactive compounds. Therefore, the component (1) needs to have a large tensile elongation at room temperature as single cured product. Though the component (1) has a rigid structure having an aromatic ring, it also has a hydroxyl group, therefore it can obtain a large tensile elongation and good adhesion to both metals and resins. According to the present invention, the component (1) is a reactive compound having an aromatic ring and a hydroxyl group which is a reaction product of a lactone-modified (meth)acrylate monomer, an acid anhydride, and an epoxy monomer.

The component (1) may preferably contain a bisphenol structural moiety from the viewpoint of improving heat resistance. Furthermore, the number of aromatic rings contained in the component (1) may preferably be 4 or more per molecule from the viewpoint of further improving the heat resistance.

The number of hydroxyl groups contained in the component (1) may preferably be 5 or less per molecule from the viewpoint of improving adhesiveness without affecting the heat resistance.

The component (1) may be preferably used in 0.1 part by mass or more and 20 parts by mass or less, more preferably 0.1 part by mass or more and less than 20 parts by mass, and most preferably 1 part by mass or more and 15 parts by mass or less with respect to 100 parts by mass of the total of the component (1) and the component (2). If the component (1) is used in 0.1 part by mass or more, the adhesion to resins and metals and the flexibility as single cured product may be improved. Further, if the component (1) is used in 20 parts by mass or less, the compatibility may be improved, resulting in obtaining a uniform resin composition.

The component (1) may preferably have a weight-average molecular weight M_{w} of 1,000 or more measured by a GPC (gel permeation chromatography) method, more preferably that of 2,000 or more. The weight-average molecular weight may preferably be 10,000 or less, more preferably 5,000 or less.

According to the present invention the component (1) includes a reactive product of a lactone-modified (meth)acrylate monomer, an acid anhydride, and an epoxy monomer. Lactone used for such lactone-modified(meth) acrylate monomer includes, but not limited to, α-acetolactone, β-propiolactone, γ-butyrolactone, δ-valerolactone, and ε-caprolactone. The lactone-modified (meth)acrylate monomer may include the Praxel series products manufactured by Daicel Corporation, and polycaprolactone -modified hydroxyethyl(meth) acrylates, which are trade name "Plaxel FA1DDM" and "Plaxel FA1" may be used. In addition, the Petrochemicals Specialty Monomers series manufactured by BASF may be used, and the trade name "HECLA" Hydroxyethylcaprolactone Acrylate may be used. Further, the lactone-modified (meth)acrylate monomer may be synthesized and used from hydroxy (meth)acrylate and hydroxycarboxylic acid, besides commercially available products. Also, 2-hydroxyethyl (meth) acrylate (for example, manufactured by Osaka Organic Chemical Industry Co., Ltd.) and 6-hydroxycaproic acid (for example, manufactured by Chemwill Asia Co., LTD) may be dehydration condensated to obtain lactone-modified (meth)acrylate monomer.

The acid anhydride may preferably be carboxylic acid anhydride, may include, but not limited to, phthalic anhydride, benzoic acid anhydride, acetic anhydride, propionic anhydride, oxalic anhydride, succinic anhydride, maleic anhydride, and 2,3-naphthalenedicarboxylic acid anhydride. Cyclic carboxylic acid anhydride may preferably be used from the viewpoint of easily reaction.

The epoxy monomer as the above-mentioned may be any one known as a raw material for an epoxy resin, and preferably be one having an aromatic ring. The epoxy monomers having an aromatic ring may include compounds having a glycidyloxyphenyl group. The compound having such a glycidyloxyphenyl group may include bisphenol A type diglycidyl ether having the following structural formula. 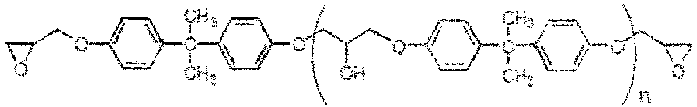 where n represents an integer greater than or equal to 0 or more, preferably an integer of 0 to 3.

The component (1) may include those having any of the following structural formulas. 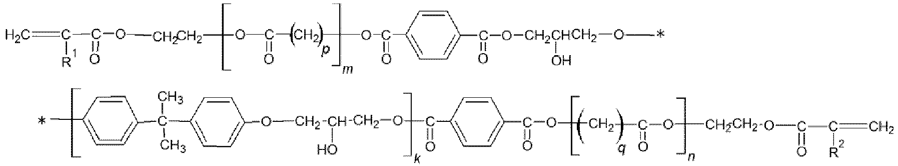 where R¹ and R² represent independently hydrogen atoms or methyl group. The factors k, m, n, p and q represent independently an integer greater than or equal to 0, and may preferably be an integer greater than or equal to 1. The factors k may preferably be 1 or more, m + n may be 2 to 25, p and q may be 1 to 10, and k may preferably be 1 to 3, m + n may be 10 to 25, and p and q may be 2 to 10. In addition, the asterisk in the formula indicates the place where the structural formula is originally connected, and is only for the convenience of the description space. 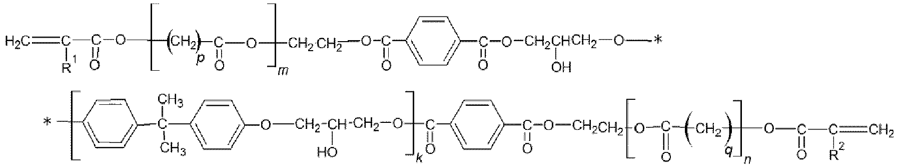 where R¹ and R² represent independently hydrogen atoms or methyl group. The factors k, m, n, p and q represent independently an integer greater than or equal to 0, and may preferably be an integer greater than or equal to 1. The factors k may preferably be 1 or more, m + n may be 2 to 25, p and q may be 1 to 10, and k may preferably be 1 to 3, m + n may be 10 to 25, and p and q may be 2 to 10. In addition, the asterisk in the formula indicates the place where the structural formula is originally connected, and is only for the convenience of the description space.

A tensile elongation of the cured product of the component (1) only in this specification shall be measured as follows. First, 3.0 parts by mass of a photoinitiator is added to 100 parts by mass of the component (1) and stirred. The stirred mixture is poured and applied onto and with a PET film by a bar coater to a thickness of 0.1 mm. It is irradiated with ultraviolet rays and cured to obtain a cured product. A tensile test is conducted for the cured product in an environment of 23 °C according to JIS K 7161-2: 2014, and the tensile elongation is measured. The tensile elongation is an increment from the length of the cured product before the test and shown with % as the unit.

The tensile elongation of the cured product of the component (1) only may be 50% or more, preferably 70% or more, and more preferably 100% or more. The tensile elongation of the cured product of the component (1) only may be preferably 500% or less, more preferably 300% or less, and most preferably 200% or less.

A reactive compound as a component (2) shall be other than the component (1) and has a function of dissolving other components of the composition. The component (2) is a reactive compound other than component (1) comprising (2-1) alkyl (meth)acrylate, (2-2) hydroxyalkyl (meth)acrylate, and (2-3) (meth)acrylate having a cyclic structure. The component (2) contains at least one (meth)acrylate or hydroxyalkyl (meth)acrylate having an aliphatic group from the viewpoint of obtaining sufficient solubility of other components.

Examples of alkyl (meth)acrylates include alkyl (meth)acrylates such as methyl (meth)acrylate, ethyl (meth)acrylate, hexyl (meth)acrylate, octyl (meth)acrylate, 2-ethylhexyl (meth)acrylate, nonyl (meth)acrylate, isononyl (meth)acrylate, decyl (meth)acrylate, isodecyl (meth)acrylate, stearyl (meth)acrylate, isostearyl (meth)acrylate, dodecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicodecyl (meth) acrylate, as well as hydroxyalkyl (meth)acrylates such as 2-hydroxyethyl (meth)acrylate, 2-hydroxypropyl (meth)acrylate, 2-hydroxybutyl (meth)acrylate, and 4-hydroxybutyl (meth) acrylate. Furthermore, monofunctional (meth)acrylates may include 2-hydroxyethyl (meth)acryloyl phosphate, 4-butylhydroxy (meth)acrylate, 2- (meth)acryloyloxyethyl-2-hydroxypropylphthalate, glycerin mono (meth)acrylate, 2-hydroxy-3- (meth) acryloyloxypropyl (meth)acrylate, pentaerythritol mono (meth)acrylate, dipentaerythritol mono (meth)acrylate, and caprolactone-modified 2-hydroxyethyl (meth)acrylate.

Examples of alicyclic or aromatic monofunctional (meth)acrylates may include adamantyl (meth)acrylate, dicyclopentenyl (meth)acrylate, isobornyl (meth)acrylate, dicyclopentenyloxyethyl (meth)acrylate, cyclohexyl (meth)acrylate, tetrahydrofurfuryl (meth)acrylate, phenoxyethyl (meth)acrylate, 1- (1-adamantyl) -1-methylethyl (meth)acrylate, benzyl (meth)acrylate, methylbenzyl (meth)acrylate, ethylbenzyl (meth)acrylate, propylbenzyl (meth)acrylate, methoxybenzyl (meth)acrylate, and chlorobenzyl (meth)acrylate. Among these, isobornyl (meth)acrylate may preferably be used due to a large effect.

The component (2) contains a reactive compound comprising alkyl (meth)acrylate (2-1), hydroxyalkyl (meth)acrylate (2-2), and (meth)acrylate having a cyclic structure (2-3), and more preferably contain the combination of alkyl (meth)acrylate (2-1), hydroxyalkyl (meth)acrylate (2-2), and (meth)acrylate having a cyclic structure (2-3).

The (meth)acrylates having a cyclic structure (2-3) may preferably be monofunctional (meth)acrylates having an alicyclic aliphatic group or an aromatic group.

The alkyl (meth)acrylate (2-1) may preferably be a (meth)acrylate having an aliphatic group. The (meth)acrylate having an aliphatic group may preferably be the (meth)acrylate represented by the following general formula (A):

General formula (A) Z-O-R¹

where Z represents a (meth)acryloyl group, and R¹ represents an alkyl group having 1 to 20 carbon atoms.

R¹ in the above formula may preferably be an alkyl group having 1 to 20 carbon atoms, and more preferably an alkyl group having 1 to 12 carbon atoms. If the number of carbon atoms is 20 or less, the surface curability can be improved, and stickiness can be suppressed, and the curing speed can be improved.

The alkyl (meth)acrylates may include methyl (meth)acrylate, ethyl (meth)acrylate, n-propyl (meth)acrylate, isopropyl (meth)acrylate, butyl (meth)acrylate, 2-ethylhexyl (meth)acrylate, isooctyl (meth)acrylate, isodecyl (meth)acrylate, lauryl (meth)acrylate, stearyl (meth)acrylate, and one or more of these may be used. Among these, methyl (meth)acrylate may preferably be used due a large effect.

The hydroxyalkyl (meth)acrylate (2-2) may preferably be the (meth)acrylate represented by the general formula (B):

General formula (B) Z-O- (R²O)ₛ-H

where Z represents a (meth)acryloyl group, R² represents -C₂H₄-, -C₃H₆-, -CH₂CH (CH₃)-, -C₄H₈- or -C₆H₁₂-, and the factor s represents an integer of 1 to 10.

The hydroxyalkyl (meth)acrylates may include 2-hydroxyethyl (meth)acrylates, 2-hydroxypropyl (meth)acrylates, hydroxybutyl (meth)acrylates, and one or more of these may be used. Among these, 2-hydroxyethyl (meth)acrylate and/or 2-hydroxypropyl (meth)acrylate may preferably be used, and 2-hydroxyethyl (meth)acrylate may more preferably be used due to a large effect.

The component (2) contains a combination of alkyl (meth)acrylate (2-1), hydroxyalkyl (meth)acrylate (2-2), and (meth)acrylate having a cyclic structure (2-3), and the content ratio may preferably be (2-1) : (2-2) : (2-3) = 10 to 90: 2 to 50: 3 to 20, more preferably 30 to 70:10 to 50: 3 to 20, and most preferably 40 to 60:20 to 40: 5 to 20 as the mass ratio in a total of 100 parts by mass of alkyl (meth)acrylate (2-1), hydroxyalkyl (meth)acrylate (2-2), and (meth)acrylate having a cyclic structure (2-3).

The component (2) may preferably be used in 80 parts by mass or more and 99.9 parts by mass or less, and more preferably more than 80 parts by mass or more and 99.9 parts by mass or less, most preferably 85 parts by mass or more and 99 parts by mass or less with respect to 100 parts by mass of the total of the component (1) and (2). If the component (2) is used in 80 parts by mass or more, the viscosity of the composition becomes appropriate and the composition can be uniformly produced. Further, if the component (1) is contained, both flexibility and heat resistance can be provided together, and high adhesion to resins and metals can be sufficiently obtained.

The polymerization initiator (3) has a function of advancing the polymerization reaction.

The polymerization initiator (3) used in the present invention may preferably be an organic peroxide. The organic peroxide may include cumene hydroperoxide, paramentan hydroperoxide, tertiary butyl hydroperoxide, diisopropylbenzene dihydroperoxide, methyl ethyl ketone peroxide, benzoyl peroxide and tertiary butylperoxybenzoate. One or more of these can be used. Among these, cumene hydroperoxide may preferably be used from the viewpoint of reactivity and storage stability.

The polymerization initiator (3) may preferably be used in 0.5 to 10 parts by mass, more preferably 1 to 7 parts by mass with respect to 100 parts by mass of the total of the components (1), (2) and (4) used as needed. If it is 0.5 parts by mass or more, the curing rate is appropriate, and if it is 10 parts by mass or less, the storage stability is appropriate.

Although it is not desired to be bound by a specific theory, the synergistic effect of containing the above-mentioned the component (1), the component (2), and the component (3), or the synergistic effect of containing the above-mentioned the component (1), the component (2), and the component (3), or the effect of containing the above-mentioned (1) to (4) can sufficiently reduce an internal stress of the obtained composition after curing. Furthermore, the composition also has good adhesion to adherends such as resins and metals and can adhere to them with sufficient resistance to the internal stress, resulting in providing extremely good hear cycle resistance.

In certain embodiments, the composition may be a two-part composition, and a first agent may preferably contain at least the component (3) and a second agent may not preferably contain the component (3). In such case, the second agent may preferably contain a reducing agent that decomposes the component (3) and generates radicals.

The elastomer (4) is added for the purpose of improving the toughness or viscosity of the composition. The "elastomer" in this specification refers to a polymer substance having rubber-like elasticity at room temperature, and may preferably be dissolved or dispersed in the components (1) and (2).

The elastomer (4) may include (meth)acrylonitrile/butadiene/methacrylic acid copolymer, (meth)acrylonitrile/butadiene/methyl (meth)acrylate copolymer, methyl (meth)acrylate/butadiene/(meth)acrylonitrile/styrene copolymer, methyl (meth)acrylate/butadiene/styrene copolymer (MBS), (meth)acrylonitrile/styrene/butadiene copolymer, and synthetic rubbers such as (meth)acrylonitrile-butadiene rubber (NBR), linear polyurethane, styrene-butadiene rubber, chloroprene rubber and butadiene rubber, styrene-based thermoplastic elastomers such as natural rubber, and styrene-polybutadiene-styrene-based synthetic rubber, olefin-based thermoplastic elastomers such as polyethylene-EPDM synthetic rubber, urethane-based thermoplastic elastomers such as caprolactone type, adipate type and PTMG type, polyester-based thermoplastic elastomers such as polybutylene terephthalate-polytetramethylene glycol multi-block polymer, polyamide-based thermoplastic elastomers such as nylon-polyol block copolymer and nylon-polyester block copolymer, 1,2-polybutadiene-based thermoplastic elastomers, and vinyl chloride-based thermoplastic elastomers. These elastomer components may be used in one or more kinds, if the compatibility is good.

Further, polybutadiene or modified polybutadiene may also be used.

Among these, methyl (meth)acrylate/butadiene/styrene copolymer and/or (meth)acrylonitrile-butadiene rubber may preferably be used, and (meth)acrylonitrile-butadiene rubber may be more preferably used from the viewpoint of the solubility and adhesion to the compound.

The elastomer component (4) may preferably be added in 5 to 35 parts by mass, more preferably 10 to 30 parts by mass with respect to 100 parts by mass of the total of the components (1) and (2). If the component (4) is used in 5 parts by mass or more, the viscosity and adhesiveness can be improved, and if it is 35 parts by mass or less, the viscosity will be appropriate and the workability may be improved.

The reducing agent (5) that generates radicals may be any known reducing agent that decomposes the component (3) and generates radicals. The reducing agent may include metal salts of organic acids, β-diketone chelate, aromatic amines and/or pyridine derivatives, tertiary alkyl amines, and thiourea derivatives. Among these, thiourea derivatives may preferably be used. The thiourea derivative may include 1-acetyl-2-thiourea, benzoylthiourea, N, N-diphenylthiourea, N, N-diethylthiourea, N, N-dibutylthiourea, and tetramethylthiourea. Among these, 1-acetyl-2-thiourea may preferably be used.

The reducing agent (5) may preferably be added in 0.1 to 10 parts by mass, preferably 0.3 to 5 parts by mass with respect to 100 parts by mass of the total of the components (1), (2) and (4) used as needed. If it is 0.1 part by mass or more, the curing rate may be appropriate, and if it is 10 parts by mass or less, the storage stability may be appropriate.

In certain embodiments, a curable composition comprising the above composition can be provided. In certain embodiments, an adhesive composition comprising the above curable composition can be provided. In certain embodiments, a bonded body adherend to an adherend (such as metals or resins) by the above adhesive composition, and a bonding method can be provided.

The composition in a preferred embodiment may preferably have a tensile strain (tensile elongation) of 20% or more measured in an atmosphere at -20 °C according to JIS K 7161-2:2014, more preferably more than 20% (that is, good low temperature flexibility).

The composition in a preferred embodiment may preferably have a tensile shear adhesive strength of 1 MPa or more measured after 24 hours against the resins by the method specified in JIS K 6850: 1999, or the fracture state may preferably be cohesive fracture. More preferably, the tensile shear adhesive strength may be 1 MPa or more and the fracture state may be cohesive fracture. The tensile shear adhesive strength may be more than 1 MPa.

The composition in a preferred embodiment may preferably have a tensile shear adhesive strength of 10 MPa or more measured after 24 hours against the metals by the method specified in JIS K 6850: 1999, or the fracture state may preferably be cohesive fracture. More preferably, the tensile shear adhesive strength may be 10 MPa or more and the fracture state may be cohesive fracture. The tensile shear adhesive strength may be more than 10 MPa.

A fracture state may preferably be cohesive fracture. As the reason, cohesive fracture has adhesiveness at the interface between the composition and the adherend. The adhesiveness at an interface fracture between the composition and the adherends is smaller than that of the cohesive fracture.

The composition in a preferred embodiment may preferably have a storage elastic modulus of 2.0 MPa or more measured at 120°C and a heating rate of 2 °C/min, in a temperature range of -50 to 150 °C, at a frequency of 1 Hz at a tensile mode with a dynamic viscoelasticity measuring device (that is, good heat cycle resistance and heat resistance), and more preferably more than 2.0 MPa.

### EXAMPLES

Hereinafter, the embodiment of the present invention will be explained in detail.

### <Examples 1>

A compound having the following structural formula for the component (1) was synthesized according to the following procedure. 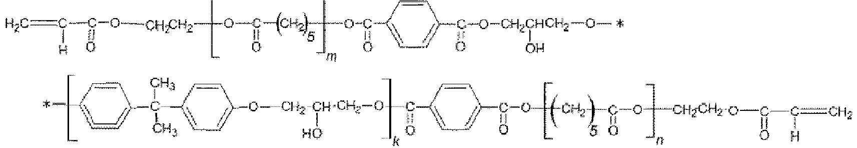 where k = 1 and m + n = 17, and the asterisk presents where the structural formula is originally connected.

### [Compound synthesis]

46 g of polycaprolactone-modified hydroxyethyl acrylate (unsaturated fatty acid hydroxyalkyl ester-modified ε-caprolactone, manufactured by Daicel Co., Ltd. Caprolactone FA1DDM, molecular weight: 230 g/mol), and 0.46 g of dibutyl hydroxytoluene (reagent grade manufactured by Tokyo Kasei Kogyo Co., Ltd., molecular weight = 220) as a polymerization inhibitor were poured into a glass 300 ml four-necked flask equipped with a Liebig cooling tube, thermometer, silicon rubber stopper for nitrogen substitution, and glass stopper. Furthermore, a stirrer was added to the four-necked flask and placed in a magnetic stirrer with an oil bath, and the mixture was stirred at 23 °C for 30 minutes (stirring speed = 300 rpm) to completely dissolve the dibutylhydroxytoluene. After cooling it to 0 °C, 0.98 g of sulfuric acid (Wako First Class, manufactured by Fuji Film Wako Pure Chemical Industries, Ltd., 98 g/mol) as an acid catalyst was added dropwise. 14.6 g of adipic acid (reagent grade manufactured by Tokyo Kasei Kogyo Co., Ltd., molecular weight = 146 g/mol) was added to the solution and stirred at 75 °C for 5 hours under a nitrogen stream (stirring speed: 300 rpm) to proceed an esterification reaction. 29.6g of phthalic anhydride (reagent grade manufactured by Tokyo Kasei Kogyo Co., Ltd., molecular weight = 148 g/mol), 34 g of 2,2-bis (4-glycidyloxyphenyl) propane ("EXA-850CRP" manufactured by DIC Corporation, molecular weight = 340 g/mol), and 0.34 g of triphenylphosphine (Hokuko TPP manufactured by Hokuko Chemical Industry Co., Ltd., molecular weight = 262 g/mol) as a reaction catalyst were added. This solution was stirred at 80 °C for 24 hours at 300 rpm to proceed an addition reaction. As a result, a crude product A was obtained.

### [Compound Purification]

The entire amount of the obtained crude product A was poured to a 500 ml separatory funnel, 126 ml of pure water was added, and the mixture was shaken at room temperature for 3 minutes. This was left still at room temperature for 3 hours, and the contents were confirmed to be separated into two layers, the pure water layer was removed. This series of operations was performed two more times, for a total of three times to obtain a colorless viscous liquid product A.

### [Compound Identification]

The obtained colorless viscous liquid product A was dissolved in deuterated chloroform (reagent grade manufactured by Tokyo Kasei Kogyo Co., Ltd.) to prepare a 3% by mass solution, and ¹H-nuclear magnetic resonance measurement (¹H-NMR) was performed. The ¹H-NMR analysis data of the obtained colorless viscous liquid product A was as follows.
¹H-NMR (CDCl₃, 500.13MHz):
δ = 7.82-7.65, 7.59-7.47, 7.14-7.06, 6.84-6.75, 6.47-6.37, 6.18-6.08, 5.88-5.80, 4.61-4.43, 4.41-4.40, 4.38-4.34, 4.33-4.28, 4.07-4.03, 2.38-2.27, 1.79-1.72, 1.70-1.57. The result supported the structure represented by the structural formula described above.

10 mg of the obtained colorless viscous liquid product A was dissolved in 10 ml of tetrahydrofuran (stabilizer-free reagent grade, manufactured by Wako Pure Chemical Industries, Ltd.), filtered through a membrane filter (PTFE, 0.50 µm) and analyzed with gel permeation chromatography (GPC).
Standard material: Shodex STANDARD (Type: SL-105, manufactured by Showa Denko)
Column: KF-801 (300mm × 8.0mm I.D., manufactured by Showa Denko)
Column temperature: 40 °C
Mobile phase: Tetrahydrofuran (stabilizer-free reagent grade, manufactured by Wako Pure Chemical Industries, Ltd.)
Flow velocity: 1 ml/min
Detector: Differential refractometer detector
3300 of the weight average molecular weight Mw was obtained.

3.0 parts by mass of the photoinitiator 2,2-Dimethoxy-2-phenylacetophenone (reagent grade manufactured by Tokyo Chemical Industry Co., Ltd.) was added into 100 parts by mass of the obtained compound (1), and the mixture was placed in the specified plastic container and stirred with a hybrid mixer "ARE-310" (manufactured by Shinky) at 2000 rpm for 3 minutes. The stirred mixture was poured onto a PET film and coated with a bar coater to a thickness of 0.1 mm. It was photocured with a UV curing device equipped with an electrodeless discharge metal halide lamp (manufactured by Fusion UV Systems Japan) under the condition of 3000 mJ/cm² of an integrated light amount with 365 nm of a wavelength to obtain a cured product having the component (1) only. A tensile elongation test was conducted for the cured product in a 23 °C environment with a universal testing machine Instron model 3365 (manufactured by Instron) according to JIS K 7161-2: 2014, and 113% of the tensile elongation was measured. Note that the unit of tensile elongation is %, which indicates the increment from the length of the cured product before the test.

The compounds obtained as described above were used as the component (1) and blended with the materials shown in the table as below to prepare compositions respectively. The amounts in the table are shown in parts by mass.

### <Materials Used >

The following commercially available products was used as the component (2).
Methyl methacrylate: Acryester M (manufactured by Mitsubishi Chemical Holdings, Inc.)
2-Hydroxyethyl methacrylate: HEMA (manufactured by Nippon Shokubai)
Isobornyl acrylate: Light acrylate IB-XA (manufactured by Kyoeisha Chemical Co., Ltd.)

The following products was used as the elastomer.
Acrylonitrile-butadiene rubber: Nipol DN401 LL (manufactured by Zeon Corporation)

The following organic peroxides were used as the polymerization initiator without pretreatment.
Cumene hydroperoxide: Park Mill H-80 (manufactured by NOF Corporation)

1-acetyl-2-thiourea: ATU (manufactured by Sanuki Chemical Industry Co., Ltd.) as the reducing agent was used without pretreatment for generating radicals.

Further, the followings were used as compared components of the component (1) for comparative examples. The tensile elongation of these cured products only was also shown as the result of measurement in the same manner as described above.
Phenoxyethyl methacrylate: Light ester PO (manufactured by Kyoeisha Chemical Co., Ltd.) Tensile elongation of the cured product only: 1%
Hydroxypropyl methacrylate: VISIOMER HPMA98 (manufactured by Evonik Performance Materials GmbH) Tensile elongation of the cured product only: 2%
Lauryl Methacrylate: Light Ester L (manufactured by Kyoeisha Chemical Co., Ltd.) Tensile elongation of the cured product only: 51%
Bisphenol A type diglycidyl ether Acrylic acid adduct: Viscote # 540 (manufactured by Osaka Organic Chemical Industry Co., Ltd.) Tensile elongation of the cured product only: 7%
4-hydroxybutyl acrylate: 4HBA (manufactured by Mitsubishi Chemical Holdings) Tensile elongation of the cured product only: 53%
Bisphenol A ethylene oxide 30 modified dimethacrylate: BPE-1300N (manufactured by Shin Nakamura Chemical Industry Co., Ltd.) Tensile elongation of the cured product only: 16%

### <Mixing process>

Each of the above raw materials was weighed as shown in the table below and added to a stainless steel 1L flask. A stainless steel stirring blade was put in the flask, and the mixture was stirred at 200 rpm for 24 hours with a three-one motor to obtain a uniform viscous liquid.

### <Evaluation>

The samples obtained as described above were evaluated based on the following measurement methods. The first agent and the second agent shown in Tables 1 and 2 were mixed at the same mass ratio and uniformed before evaluation.

Low temperature flexibility: A cured product was used in the shape of a 1BA type dumbbell test piece specified in Annex A of JIS K 7161-1: 2014 under a -20 °C atmosphere according to JIS K 7161-1 for the test piece. A tensile elongation test was conducted with a universal testing machine, Instron model 3365 (manufactured by Instron), and the measured tensile strain was determined in % units.

Resin adhesion: A test piece with dimensions of 2.0 × 25 × 100 mm (manufactured by Testpiece) comprised with polycarbonate resins "Panlite L1225"manufactured by Teijin was used without pretreatment for the test pieces. A tensile shear adhesive strength test was conducted and measured under standard conditions (23 °C) with a universal testing machine, Instron model 4467 (manufactured by Instron) according to JIS K 6850: 1999. The shear strength after the test pieces were overlapped and adhered was determined in MPa units.

Metal adhesion: A galvanized chromate steel sheet with dimensions of 1.6 × 25 × 100 mm (manufactured by Testpiece) was purchased and used without pretreatment for the test pieces. The tensile shear adhesive strength test was conducted and measured under standard conditions (23 °C) with a universal testing machine, Instron model 4467 (manufactured by Instron) according to JIS K 6850: 1999. The shear strength after the test pieces were overlapped and adhered was determined in MPa units.

Heat cycle resistance / heat resistance: A strip-shaped cured product with dimensions of 0.5 × 5 × 40 mm was used for the test pieces. The data of storage elastic modulus at 120 °C was measured at a heating rate of 2 °C/min, a temperature range of -50 to 150 °C, a frequency of 1 Hz and at a tensile mode with a dynamic viscoelasticity measuring device ("DMS7100" manufactured by SII) and determined in MPa units.

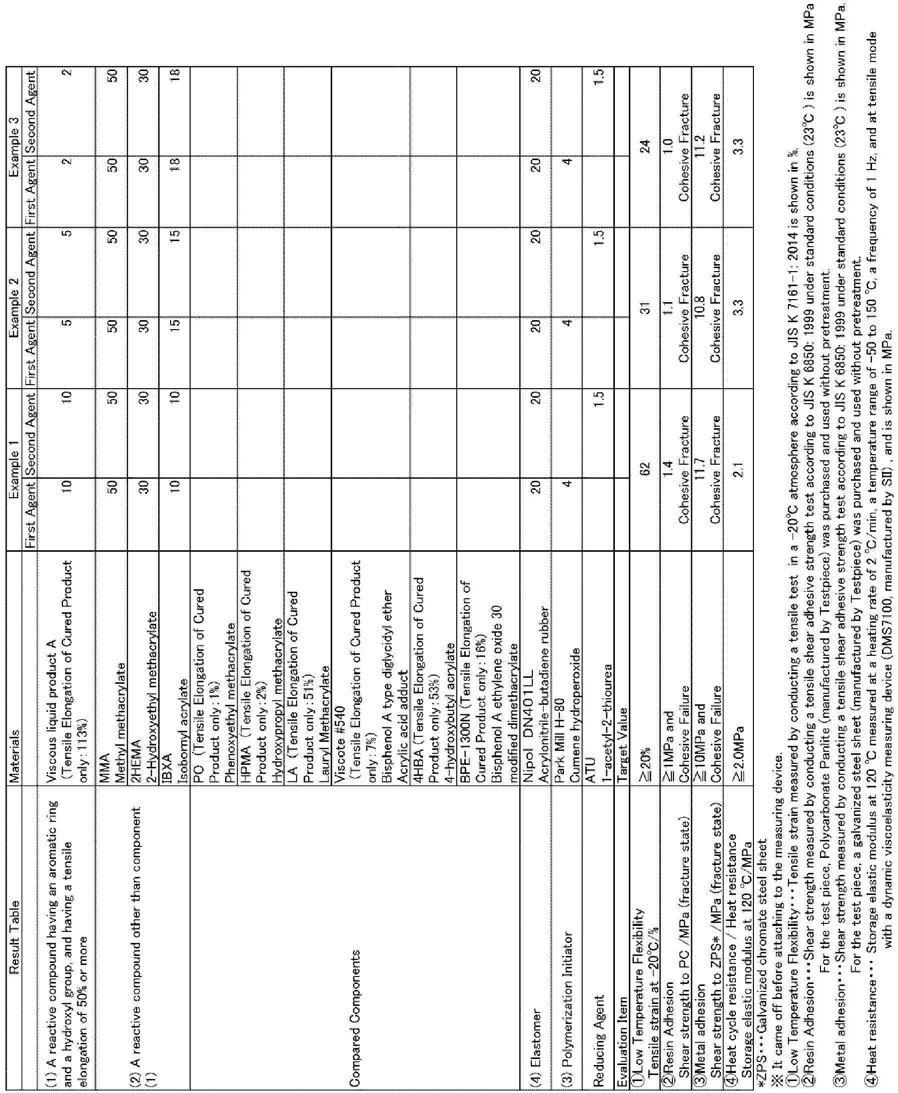

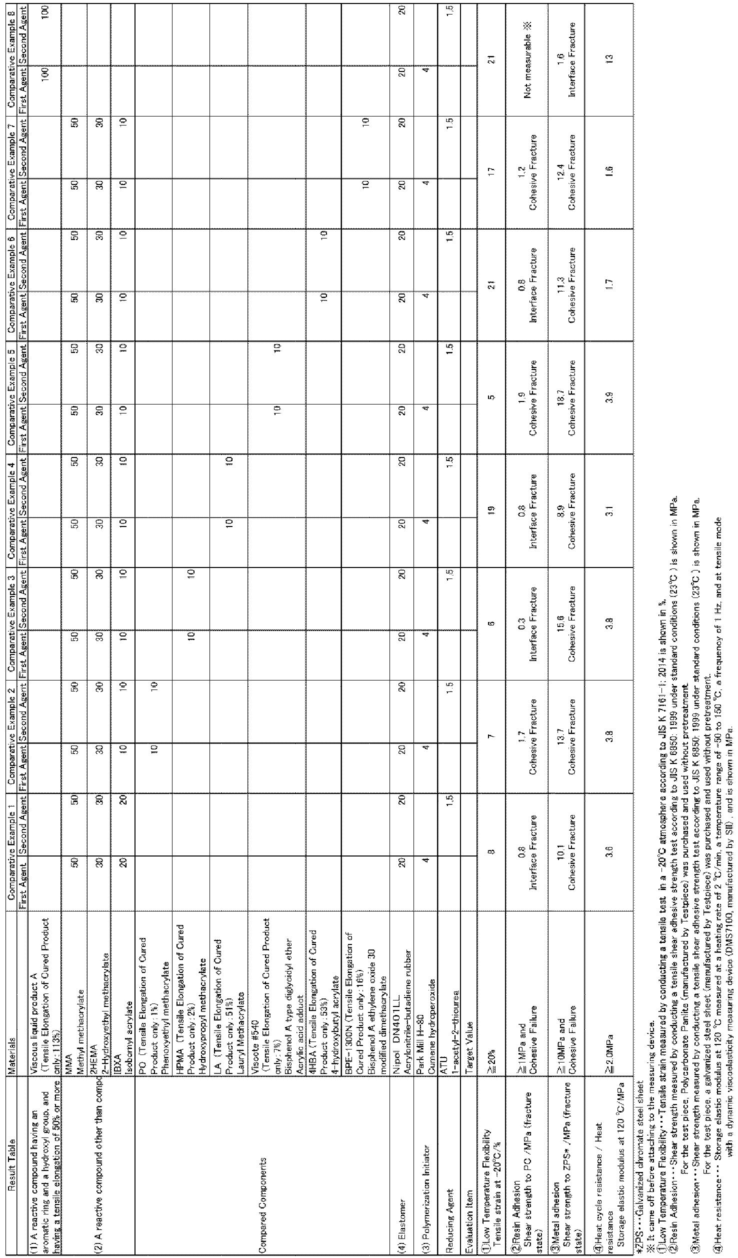

In Examples 1 to 3, the cured products having an aromatic ring and a hydroxyl group and comprising reactive components (1) having a tensile elongation of 50% or more measured in an atmosphere of 23 °C according to JIS K 7161-2: 2014 were used. All of Examples 1 to 3 showed good results in all the evaluation items.

On the other hand, in Comparative Example 1, the component (1) was not used, the low temperature flexibility and the resin adhesion were poor. In addition, in Comparative Example 8, the component (1) was used only, and the resin adhesion and the metal adhesion were poor. Further, in Comparative Examples 2 to 7, various compared components were used, any of their performance was poor.

The composition provided by the embodiment of the present invention exhibited good flexibility, heat cycle resistance and heat resistance, and also exhibited good adhesion to both metals and resins.

Patent Document 4 discloses that the use of SGA can improve the heat resistance of SGA. However, the more sophisticated and diversified the properties have been required year by year, the higher heat cycle resistance, heat resistance and flexibility have been required together. When zeolite which is an inorganic compound is added to SGA, the flexibility is generally reduced. That is, the problem of trade-off between heat cycle resistance / heat resistance and flexibility could not be solved. Specifically, the conventional bisphenol A type epoxy (meth)acrylate disclosed in Patent Document 4 had to have the lengthened alkylene chain portion which is heat-sensitive in order to improve the flexibility, resulting in that poor heat cycle resistance / heat resistance.

The embodiment of the present invention can solve the above-mentioned problems.

## Claims

1. A composition, comprising the following components (1) to (3):
(1) a reactive compound having an aromatic ring and a hydroxyl group which is a reaction product of a lactone-modified (meth)acrylate monomer, an acid anhydride, and an epoxy monomer, wherein a cured product of the reactive compound, obtainable by irradiation with ultraviolet rays, has a tensile elongation of 50% or more measured in an atmosphere at 23 °C according to JIS K 7161-2:2014;
(2) a reactive compound other than component (1) comprising:
(2-1) alkyl (meth)acrylate,
(2-2) hydroxyalkyl (meth)acrylate, and
(2-3) (meth)acrylate having a cyclic structure; and
(3) a polymerization initiator.

2. The composition according to Claim 1, wherein component (1) contains a bisphenol moiety.

3. The composition according to Claim 1 or 2, wherein component (1) contains four or more aromatic rings per molecule.

4. The composition according to any one of Claims 1 to 3, wherein component (1) contains five or less hydroxyl groups per molecule.

5. The composition according to any one of Claims 1 to 4, wherein an amount of component (1) is in a range of 0.1 or more to 20 or less parts by mass with respect to 100 parts by a total mass of components (1) and (2).

6. The composition according to any one of Claims 1 to 5, wherein component (1) has a (meth)acryloyl group.

7. The composition according to any one of Claims 1 to 6, wherein component (1) has a weight-average molecular weight M_{w} of 1,000 or more measured by a GPC method.

8. The composition according to any one of Claims 1 to 7, further comprising:
(4) an elastomer.

9. The composition according to any one of Claims 1 to 8, further comprising:
(5) a reducing agent.

10. The composition according to any one of Claims 1 to 9, wherein the composition is a two-part composition which contains:
a first agent containing at least (3) polymerization initiator; and
a second agent not containing at least (3) polymerization initiator.

11. The composition according to any one of Claims 1 to 9, wherein the composition is a two-part composition which contains:
a first agent containing at least (3) polymerization initiator; and
a second agent containing at least (5) a reducing agent.

12. A curable composition comprising the composition according to any one of Claims 1 to 11.

13. An adhesive composition comprising the curable composition according to Claim 12.

14. A bonded body comprising an adherend bonded by the adhesive composition according to Claim 13.

15. A bonding method, comprising the steps of:
applying the adhesive composition according to Claim 13 to an adherend; and
bonding the adherend.

16. The composition according to any one of Claims 1 to 11, wherein component (1) is a compound comprising any of the following structural formulae: 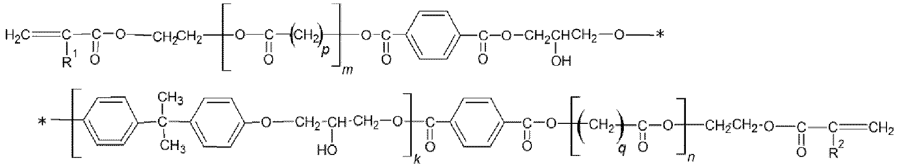
where R¹ and R² represent independently hydrogen atoms or methyl group; and k,
m, n, p and q represent independently an integer greater than or equal to 0. 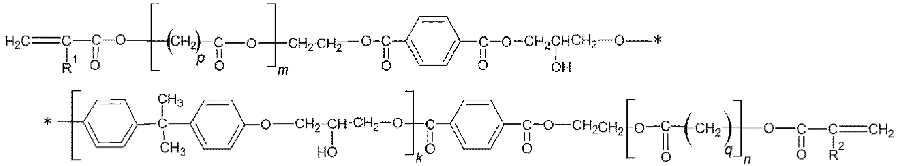
where R¹ and R² represent independently hydrogen atoms or methyl group; and k,
m, n, p and q represent independently an integer greater than or equal to 0.

17. The composition according to Claim 16, wherein k is an integer greater than or equal to 1.

## Patentansprüche

1. Zusammensetzung, umfassend die folgenden Komponenten (1) bis (3):
(1) eine reaktive Verbindung mit einem aromatischen Ring und einer Hydroxylgruppe, wobei es sich um ein Reaktionsprodukt eines Lactonmodifizierten (Meth)acrylatmonomers, eines Säureanhydrids und eines Epoxymonomers handelt, wobei ein gehärtetes Produkt der reaktiven Verbindung, das durch Bestrahlung mit ultravioletten Strahlen erlangbar ist, eine Zugdehnung von 50 % oder mehr aufweist, die in einer Atmosphäre bei 23 °C gemäß JIS K 7161-2:2014 gemessen wird;
(2) eine andere reaktive Verbindung als die Komponente (1), umfassend:
(2-1) Alkyl(meth)acrylat,
(2-2) Hydroxyalkyl(meth)acrylat, und
(2-3) (Meth)acrylat mit einer cyclischen Struktur; und
(3) einen Polymerisationsinitiator.

2. Zusammensetzung nach Anspruch 1, wobei die Komponente (1) eine Bisphenolgruppe enthält.

3. Zusammensetzung nach Anspruch 1 oder 2, wobei die Komponente (1) vier oder mehr aromatische Ringe pro Molekül enthält.

4. Zusammensetzung nach einem der Ansprüche 1 bis 3, wobei die Komponente (1) fünf oder weniger Hydroxylgruppen pro Molekül enthält.

5. Zusammensetzung nach einem der Ansprüche 1 bis 4, wobei eine Menge der Komponente (1) in einem Bereich von 0,1 oder mehr bis 20 oder weniger Masseteilen, bezogen auf 100 Teile einer Gesamtmasse der Komponenten (1) und (2), liegt.

6. Zusammensetzung nach einem der Ansprüche 1 bis 5, wobei die Komponente (1) eine (Meth)acryloylgruppe aufweist.

7. Zusammensetzung nach einem der Ansprüche 1 bis 6, wobei die Komponente (1) ein gewichtsmittleres Molekulargewicht M_{w} von 1.000 oder mehr, das durch ein GPC-Verfahren gemessen wird, aufweist.

8. Zusammensetzung nach einem der Ansprüche 1 bis 7, ferner umfassend:
(4) ein Elastomer.

9. Zusammensetzung nach einem der Ansprüche 1 bis 8, ferner umfassend:
(5) ein Reduktionsmittel.

10. Zusammensetzung nach einem der Ansprüche 1 bis 9, wobei die
Zusammensetzung eine zweiteilige Zusammensetzung ist, die Folgendes enthält:
ein erstes Mittel, das mindestens (3) den Polymerisationsinitiator enthält; und
ein zweites Mittel, das nicht mindestens (3) den Polymerisationsinitiator enthält.

11. Zusammensetzung nach einem der Ansprüche 1 bis 9, wobei die
Zusammensetzung eine zweiteilige Zusammensetzung ist, die Folgendes enthält:
ein erstes Mittel, das mindestens (3) den Polymerisationsinitiator enthält; und
ein zweites Mittel, das mindestens (5) ein Reduktionsmittel enthält.

12. Härtbare Zusammensetzung, umfassend die Zusammensetzung nach einem der Ansprüche 1 bis 11.

13. Klebstoffzusammensetzung, umfassend die härtbare Zusammensetzung nach Anspruch 12.

14. Verbundener Körper, umfassend ein durch die Klebstoffzusammensetzung nach Anspruch 13 verbundenes Fügeteil.

15. Verbindungsverfahren, umfassend die folgenden Schritte:
Auftragen der Klebstoffzusammensetzung nach Anspruch 13 auf ein Fügeteil; und
Verbinden des Fügeteils.

16. Zusammensetzung nach einem der Ansprüche 1 bis 11, wobei die Komponente (1) eine Verbindung ist, die eine der folgenden Strukturformeln umfasst: 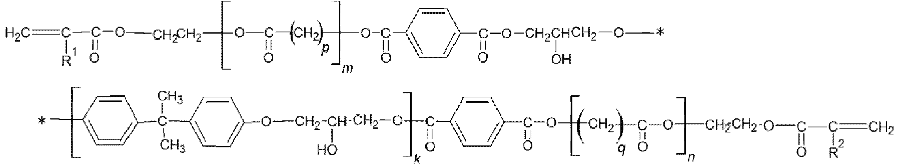
wobei R¹ und R² unabhängig voneinander Wasserstoffatome oder eine
Methylgruppe darstellen; und k, m, n, p und q unabhängig voneinander eine ganze Zahl größer als oder gleich 0 darstellen. 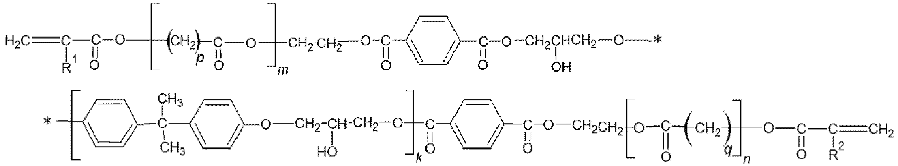
wobei R¹ und R² unabhängig voneinander Wasserstoffatome oder eine
Methylgruppe darstellen; und k, m, n, p und q unabhängig voneinander eine ganze Zahl größer als oder gleich 0 darstellen.

17. Zusammensetzung nach Anspruch 16, wobei k eine ganze Zahl größer als oder gleich 1 ist.

## Revendications

1. Composition comprenant les composants suivants (1) à (3) :
(1) un composé réactif ayant un cycle aromatique et un groupe hydroxyle qui est un produit de réaction d'un monomère (méth)acrylate modifié par lactone, d'un anhydride acide et d'un monomère époxy, dans laquelle un produit durci du composé réactif, pouvant être obtenu par irradiation avec des rayons ultraviolets, présente un allongement à la traction de 50 % ou plus, mesuré dans une atmosphère à 23 °C selon JIS K 7161-2:2014 ;
(2) un composé réactif autre que le composant (1), comprenant :
(2-1) (méth)acrylate d'alkyle,
(2-2) (méth)acrylate d'hydroxyalkyle, et
(2-3) (méth)acrylate ayant une structure cyclique ; et
(3) un initiateur de polymérisation.

2. Composition selon la revendication 1, dans laquelle le composant (1) contient un fragment de bisphénol.

3. Composition selon la revendication 1 ou 2, dans laquelle le composant (1) contient quatre cycles aromatiques ou plus par molécule.

4. Composition selon l'une quelconque des revendications 1 à 3, dans laquelle le composant (1) contient cinq groupes hydroxyles ou moins par molécule.

5. Composition selon l'une des revendications 1 à 4, dans laquelle une quantité de composant (1) est comprise entre 0,1 ou plus et 20 parties ou moins en masse par rapport à 100 parties en masse totale des composants (1) et (2).

6. Composition selon l'une quelconque des revendications 1 à 5, dans laquelle le composant (1) comporte un groupe (méth)acryloyle.

7. Composition selon l'une quelconque des revendications 1 à 6, dans laquelle le composant (1) a un masse moléculaire moyenne en poids M_{w} de 1 000 ou plus, mesurée par un procédé GPC.

8. Composition selon l'une des revendications 1 à 7, comprenant en outre :
(4) un élastomère.

9. Composition selon l'une des revendications 1 à 8, comprenant en outre :
(5) un agent réducteur.

10. Composition selon l'une quelconque des revendications 1 à 9, dans laquelle la composition est une composition en deux parties qui contient :
un premier agent contenant au moins (3) initiateur de polymérisation ; et
un deuxième agent ne contenant pas au moins (3) initiateur de polymérisation.

11. Composition selon l'une quelconque des revendications 1 à 9, dans laquelle la composition est une composition en deux parties qui contient :
un premier agent contenant au moins (3) un initiateur de polymérisation ; et
un deuxième agent contenant au moins (5) un agent réducteur.

12. Composition durcissable comprenant la composition selon l'une quelconque des revendications 1 à 11.

13. Composition adhésive comprenant la composition durcissable selon la revendication 12.

14. Corps collé comprenant un adhérent collé par la composition adhésive selon la revendication 13.

15. Procédé de collage comprenant les étapes suivantes :
appliquer la composition adhésive selon la revendication 13 sur un adhérent ; et
coller l'adhérent.

16. Composition selon l'une quelconque des revendications 1 à 11, dans laquelle le composant (1) est un composé comprenant l'une quelconque des formules structurelles suivantes : 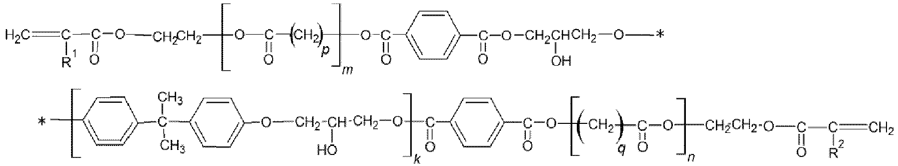 où R¹ et R² représentent indépendamment des atomes d'hydrogène ou un groupe méthyle ; et k, m, n, p et q représentent indépendamment un nombre entier supérieur ou égal à 0. 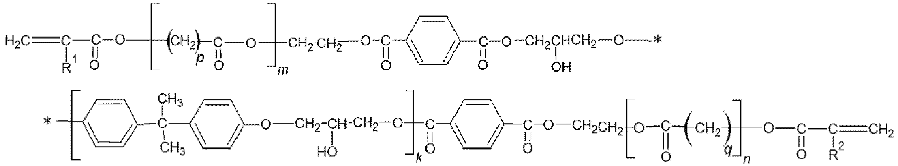 où R¹ et R² représentent indépendamment des atomes d'hydrogène ou un groupe méthyle ; et k, m, n, p et q représentent indépendamment un nombre entier supérieur ou égal à 0.

17. Composition selon la revendication 16, dans laquelle k est un nombre entier supérieur ou égal à 1.
